Europäisches Patentamt

(19) European Patent Office

Office européen des brevets

(11) Publication number : **0 448 296 A2**

# EUROPEAN PATENT APPLICATION

(12)

(21) Application number : **91302216.6**

(22) Date of filing : **15.03.91**

(51) Int. Cl.⁵ : **B60J 10/02**

(30) Priority : **19.03.90 US 495481**

(43) Date of publication of application :
**25.09.91 Bulletin 91/39**

(84) Designated Contracting States :
**DE FR GB**

(71) Applicant : **THE STANDARD PRODUCTS COMPANY**
**2130 West 110th Street**
**Cleveland Ohio 44102 (US)**

(72) Inventor : **Desir, Julio, Sr.**
**373 Sherbourne Dr.**
**Inkster, Michigan 48141 (US)**

(74) Representative : **Jones, Michael Raymond et al**
**HASELTINE LAKE & CO. Hazlitt House 28**
**Southampton Buildings Chancery Lane**
**London WC2A 1AT (GB)**

(54) **Reveal moulding.**

(57)   A glass reveal moulding, having a generally J-shaped clamping portion with a leg, body and head, which preferably exerts substantially even gripping pressures on both the top and bottom surfaces of the glass. The moulding also provides a crown which covers the gap between the vehicle body contour and the glass perimeter. The moulding utilizes a more rigid material on the clamping portion and a softer, more flexible material on the crown portion. The moulding substantially eliminates roll-over or disengagement of the moulding to the glass prior to complete assembly.

Fig-4

EP 0 448 296 A2

# REVEAL MOULDING

The present invention relates generally to edge moulding for window panels or the like. More particularly, the present invention relates to a moulding for a fixed window of an automobile vehicle such as a windscreen or rear window. The moulding bridges space between the edge of the glass panel and the adjacent body panel.

Windscreens and rear windows of automobile vehicles are commonly mounted to the associated vehicle body in a manner which leaves a space between the periphery of the glass panel and the body panel. This space is covered by moulding, referred to as a windscreen or rear window reveal moulding. In covering the space between the glass panel and vehicle body, the reveal moulding serves to improve the visual appearance of the automobile vehicle and to reduce wind noise.

To present the best visual appearance, reveal mouldings must extend evenly around the space between the glass panel and body panel and must be able to accommodate spaces having varying widths. Reveal moulding should also be able to curve around the radius of the glass panel without detaching from the edge of the panel or twisting to become disengaged from the glass panel or body panel. Reveal moulding also should resist fluttering in the relative wind.

Many mouldings designed for attachment to the edge of glass of an automobile are of a single, asymmetrical construction. When such mouldings are attached around the radius of a glass panel edge the clamping pressure of the two opposing moulding surfaces is uneven due to the difference of resistance between the mass of material above and below the centre axis of glass. This difference in resistance can cause gapping of one gripper or the other resulting in as loss of uniform gripping about the radius. Loss of gripping can result in detachment of the moulding from the glass edge and a rolling of the moulding away from the surface of the glass or from the surface of the vehicle body. This result is unsightly and defeats the cosmetic function of the moulding as well as increasing the possibility of the moulding becoming snagged and pulled out.

One patent which overcomes the above shortcomings is U.S. Patent No. 4,813,733, assigned to the assignee of the present application. While this device functions satisfactorily, designers strive to improve the art.

According to the present invention, there is provided a moulding comprising:

a clamping member having in cross-section an overall general "J" shape with a leg, body and head, the head being divided by the body into a front and rear portion such that the leg, body and front portion of the head define a channel for receiving a panel edge; and

a crown coupled to the head and extending beyond the head front and rear portions, wherein the clamping member and crown are formed as one unit, and the clamping member is formed of a material more rigid than the crown.

The reveal moulding of the present invention can be made so as to exert substantially even gripping pressure on both the top and bottom surfaces of the glass panel. The equalizing pressure of the clamping portion will substantially eliminate gapping around the radius and retains the moulding on the windscreen without gapping or rolling of the moulding.

A further understanding of the present invention will be had from the following description of the preferred embodiments taken in conjunction with the attached drawings, in which:-

Figure 1 is a perspective view illustrating one embodiment of a reveal moulding of the present invention in place about the periphery of the windscreen of an automotive vehicle;

Figure 2 is an enlarged view of the reveal moulding of Figure 1;

Figure 3 is a cross-section through the reveal moulding in a relaxed condition; and

Figure 4 is a cross-section, taken along line 4-4 of Figure 2 thereof.

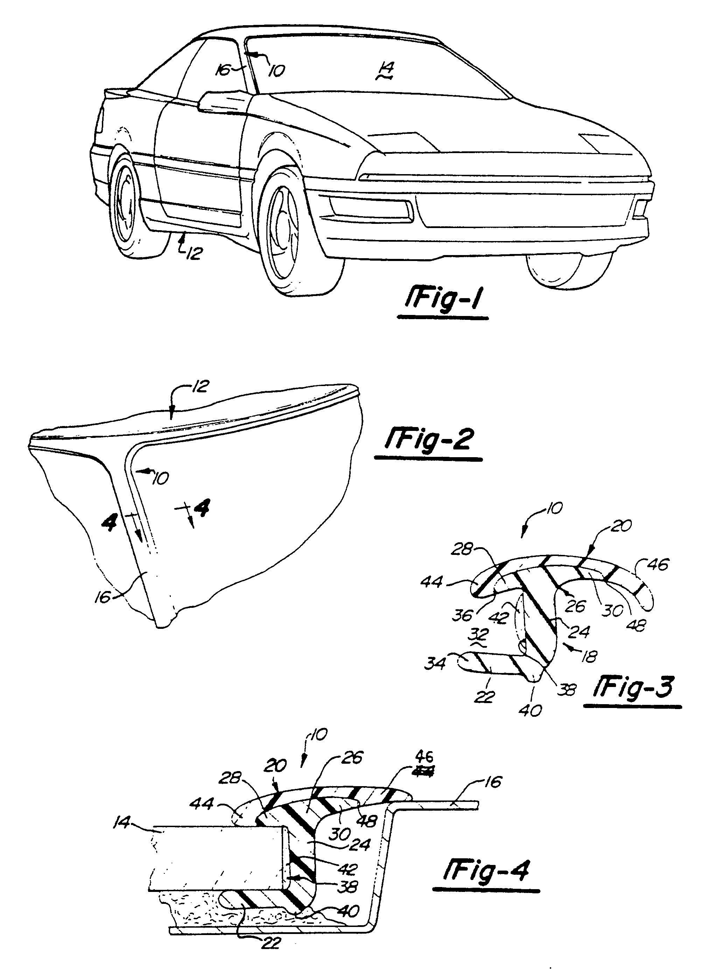

Referring to Figures 1 and 2, a preferred embodiment of a hug-on glass moulding of the present invention is illustrated and indicated generally by the reference numeral 10. Figure 1 illustrates hug-on glass moulding 10 in operative association with an automobile 12 as a windscreen reveal moulding. As shown in Figure 2, the hug-on glass moulding 10 extends around the sides and top of a windscreen 14 to cover the space between a conventionally installed windscreen 14 and a body panel 16 of the automobile 12. It will, of course, be appreciated by those skilled in the art that hug-on glass moulding 10 is well suited for use as a windscreen or rear window reveal moulding for an automobile but also has moulding uses both inside and outside the automobile vehicle field.

Hug-on glass moulding 10 is comprises of a suitable elastic material and is an elongated moulding broadly comprising, in cross-section, a generally J-shaped clamping portion 18 with a leg, body and head and a crown 20, both of which may be comprised of a polyvinyl chloride or other suitable elastomeric material as is common int he art. Ordinarily, the generally J-shaped clamping portion 18 is formed of a generally rigid polyvinyl chloride and the crown 20 is formed of a softer, more flexible polyvinyl chloride material.

The polyvinyl chloride utilized for the clamping portion 18 should provide adequate strength to the moulding. Also, it should accentuate the moulding's ability to firmly hold on to the glass and should be less susceptible to react to various weather conditions. The softer crown 20 provides the flexibility needed for spanning the gap between the glass panel and the body member and contacting the body member. As will be explained herein, the flexibility is controlled by the extension of the crown beyond the sealing point of the more rigid clamping portion 18.

It will be understood that the durometer of the plastic for the generally J-shaped clamping portion 18 is selected to provide and assure a desired level of rigidity and interference fit and attachment to the moulding with the window panel. The durometer of the crown 20 is selected to provide and assume a desired level of flexibility and resilience for yieldable sealing contact between the crown 20 and window panel 14 and the body panel 16. Ordinarily, the clamping portion 18 and crown 20 are to be co-extruded and are comprised of polyvinyl chloride of a hardness of durometer, shore A 93-97 instantaneous and shore A 80-85 instantaneous, respectively.

The generally J-shaped clamping portion 18 includes a leg 22, body 24 and head 26. The head 26 is divided into a front portion 28 and rear portion 30 by the body 24 with the rear portion 30 being longer than the front portion 28. The leg 22, body 24 and front portion 28 of head 26 form a channel 32 which receives the glass panel 14. The leg 22, in a relaxed position, is substantially perpendicular to the body 24 having its outward free end 34 curling slightly inward into the channel 32. The head front portion 28 and rear portion 30, in a relaxed position, both arcuately extend from the body 24. The head front portion 28 has its free end 36 extending inwardly into the channel 32. The leg 22 is longer than head front portion 28 and generally extends a distance further away form the body 24. The leg 22 extends a distance from the surface 38 which is ordinarily greater than the width of the glass panel 14. This length may be as little as 0.5 millimetre longer than the specified glass thickness to prevent roll-over of the moulding. The body 24 has a substantially planar interior surface 38 which defines the web of the generally U-shaped channel 32. The surface 38 has a span between the leg 22 and head front portion 28 which defines the maximum width of a glass panel which may be accepted by the clamping member 18. Also, the inward ends 34 and 36 define a minimum span between the leg 22 and front portion 28 for accepting the minimum width of a glass panel.

The generally J-shaped clamping portion 18 includes a bottom rib 40. The bottom rib 40 enables an adhesive to flow around the rib 40 to mechanically lock the hug-on glass moulding 10 in place with respect to the vehicle body when the adhesive hardens.

Also, a heat activated adhesive 42 may be positioned into the channel 32, ordinarily on surface 38, for retention of the hug-on glass moulding 10 on the edge of the windscreen 14 during assembly. The heat activated adhesive holds the hug-on moulding 10 in place until final assembly on the vehicle.

The crown 20 provides a cover which is preferably umbrella-shaped and which extends across the space between the windscreen 14 and the adjacent vehicle body 16. The crown 18 must be resilient and flexible so as to maintain an overlying engagement with the associated vehicle body which may not always be in exact alignment. The crown 20 includes a crown head portion 44 and a crown tail portion 46. The crown head portion 44 covers the head front portion 28 of the clamping member 18.

The crown head portion 44 along with the head front portion 28 of the clamping member is of a substantially equal mass as the leg 22 so that the same mass is above and below the central plane of the glass windscreen 14. This allows for even clamping pressure on the opposite surfaces of the glass portion. This equalized pressure or force of the clamping member reduces the problem of gapping and twisting around the radius of the windscreen and enhances retention of the moulding on the windscreen without rolling or gapping of the moulding. Thus, problems with respect to detachment of the moulding from the glass edge or a rolling of the moulding away from the glass edge are minimized.

The crown tail portion 46 is substantially flexible to contact the vehicle body 16. The flexibility is controlled by the extension of the crown tail portion 46 beyond the sealing point 48 of the crown tail portion 46 with the head rear portion 30. When hug-on moulding 10 is installed, as seen in Figure 4, the head rear portion 30 and crown tail portion 46 are straightened and extended form their relaxed arcuate position. Due to the desire of the more rigid straightened head rear portion 30 to return to its relaxed arcuate portion, the head rear portion 30 generates a downward force in the head rear portion 30 to pull the crown tail portion 46 downward which, in turn, causes the crown tail portion 46 to engage in sealing contact with the vehicle body 16, as seen in Figure 4.

The hug-on moulding 10 is well adapted to be a windscreen reveal moulding. Hug-on moulding 10 can accommodate uneven edges of glass without becoming twisted or otherwise disengaged. Furthermore, hug-on moulding 10 can be easily installed and is stable once installed to resist disengagement due to temperature extremes, wind or the like. Clamping portion 18 uniformly engages the glass panel edge while crown 20 uniformly covers the space between the glass panel edge and the body panel edge.

## Claims

1. A moulding comprising:
     a clamping member having in cross-section an overall general "J" shape with a leg, body and head, the head being divided by the body into a front and rear portion such that the leg, body and front portion of the head define a channel for receiving a panel edge; and

a crown coupled to the head and extending beyond the head front and rear portions, wherein the clamping member and crown are formed as one unit, and the clamping member is formed of a material more rigid than the crown.

2. A moulding according to claim 1, wherein the clamping member further comprises a rib.

3. A moulding according to claim 1 or 2, further comprising an adhesive means for securing the clamping member to the panel edge, the adhesive means being coupled to the clamping member.

4. A moulding according to any preceding claim, wherein the leg extends substantially perpendicularly to the body and has a rounded tip curling slightly inward to the channel.

5. A moulding according to any preceding claim, wherein the head front portion arcuately extends from the body toward the leg.

6. A moulding according to any preceding claim, wherein the clamping member is made of a material with a shore A hardness of between 93 and 97 instantaneous and the crown is made of a material with a shore A hardness of between 80 to 85 instantaneous, and wherein the clamping member and crown are preferably formed by co-extrusion.

7. A moulding according to any preceding claim, wherein the leg extends a longer distance away from the body than head front portion.

8. A moulding according to any preceding claim, wherein the leg is longer than the minimum distance between the head front portion and the leg.

9. A moulding according to any preceding claim, wherein the moulding bridges the space between the edge of the glass panel and an adjacent body panel when used to secure a fixed window of an automobile vehicle.

10. A moulding according to any preceding claim, wherein the crown has a crown head portion and a crown tail portion, and wherein the combination of the crown head portion and head front portion is of substantially the same mass as the leg.

EP 0 448 296 A2

*Fig-1*

*Fig-2*

*Fig-3*

*Fig-4*

5